# EUROPEAN PATENT SPECIFICATION

(11) **EP 3 103 276 B1**
(45) Date of publication and mention of the grant of the patent: **17.04.2019**
(21) Application number: 15708364.3
(22) Date of filing: 05.02.2015
(51) Int. Cl.: H04W 16/04, H04W 16/14, H04L 5/00, H04W 72/00, H04W 72/04

(54) **METHODS FOR INTER-OPERATOR COEXISTENCE ON SHARED SPECTRUM OR UNLICENSED BANDS**
VERFAHREN FÜR INTER-OPERATEUR KOEXISTENZ AUF GEMEINSAMEN SPEKTRUM SOWIE LIZENZFREIE FREQUENZBÄNDER
METHODES POUR INTER-OPÉRATEUR CO-EXISTENCE SUR LE SPECTRE DE FRÉQUENCES PARTAGÉES OU BANDES DE FRÉQUENCES SANS LICENCE

(30) Priority: 05.02.2014 US 201461936214 P; 04.02.2015 US 201514613761
(43) Date of publication of application: 14.12.2016
(73) Proprietor: Qualcomm Incorporated, San Diego, CA 92121-1714 (US)
(72) Inventor: FAN, Mingxi, San Diego, California 92121-1714 (US); SADEK, Ahmed Kamel, San Diego, California 92121-1714 (US); GAAL, Peter, San Diego, California 92121-1714 (US)
(74) Representative: Dunlop, Hugh Christopher
(86) International application number: PCT/US2015/014642
(87) International publication number: WO 2015/120163

(56) References cited:
- EP-A1- 2 667 651
- EP-A2- 1 850 543
- WO-A1-2013/179095
- WO-A2-2010/088586
- US-A1- 2011 151 887
- ZHIQIANG LI ET AL: "A Distributed Consensus-Based Cooperative Spectrum-Sensing Scheme in Cognitive Radios", 1 January 2010 (2010-01-01), IEEE TRANSACTIONS ON VEHICULAR TECHNOLOGY, IEEE SERVICE CENTER, PISCATAWAY, NJ, US, PAGE(S) 383 - 393, XP011295507, ISSN: 0018-9545 page 383 - page 386 page 392
- CORDEIRO C ET AL: "An introduction to the first wireless Standard based on Cognitive Radios", JOURNAL OF COMMUNICATIONS, ACADEMY PUBLISHERS, OULU, FI, vol. 1, no. 1, 1 April 2006 (2006-04-01), pages 38-47, XP002486875, ISSN: 1796-2021

## Description

### BACKGROUND

Wireless communication systems are widely deployed to provide various types of communication content such as voice, data, video and the like, and deployments are likely to increase with introduction of new data oriented systems such as Long Term Evolution (LTE) systems. Wireless communications systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, LTE systems and other orthogonal frequency division multiple access (OFDMA) systems.

An orthogonal frequency division multiplex (OFDM) communication system effectively partitions the overall system bandwidth into multiple (NF) subcarriers, which may also be referred to as frequency sub-channels, tones, or frequency bins. For an OFDM system, the data to be transmitted (i.e., the information bits) is first encoded with a particular coding scheme to generate coded bits, and the coded bits are further grouped into multi-bit symbols that are then mapped to modulation symbols. Each modulation symbol corresponds to a point in a signal constellation defined by a particular modulation scheme (e.g., M-PSK or M-QAM) used for data transmission. At each time interval that may be dependent on the bandwidth of each frequency subcarrier, a modulation symbol may be transmitted on each of the NF frequency subcarrier. Thus, OFDM may be used to combat inter-symbol interference caused by frequency selective fading, which is characterized by different amounts of attenuation across the system bandwidth.

Generally, a wireless multiple-access communication system can simultaneously support communication for multiple wireless terminals (also referred to as user equipments (UEs) or access terminals (ATs)). Each terminal communicates with one or more base stations (also referred to as access points (APs)) via transmissions on forward and reverse links The forward link (also referred to as a downlink) refers to the communication link from the base stations to the terminals, and the reverse link (also referred to as an uplink) refers to the communication link from the terminals to the base stations. These communication links may be established via a single-in-single-out (SISO), single-in-multiple-out (SIMO), multiple-in-single-out (MISO) or a multiple-in-multiple-out (MIMO) system.

The proliferation of wireless devices and applications has generated a huge demand for bandwidth that is expected to grow well into the future. Unfortunately, bandwidth is very scarce and hence an efficient utilization of this resource is crucial. The Federal Communication Commission's (FCC's) established frequency allocation shows a heavily crowded and fragmented spectrum with most frequency bands already assigned to different licensed (primary) users for specific services. However, studies conducted by the FCC and in the industry show that on the average only about 15% of the spectrum is used at any given time and location.

Accordingly, several techniques for sharing spectrum among different users, such as those that can be encompassed by the term "cognitive radio," have been developed that seek to overcome the spectral shortage problem by enabling secondary (unlicensed) wireless devices to communicate without interfering with the primary (licensed) users of a frequency bands. Cognitive radio communication faces a multitude of challenges in spectrum access, coexistence and sharing. In single secondary user environments, the spectrum access problem reduces to that of primary user sensing. Based on the sensing metric and the interference tolerable at the primary users, the secondary user decides to either transmit (when no primary user is detected) or goes to an idle state (when a primary user is detected).

With multiple secondary users in the same system, however, more complex coexistence protocols are required to ensure efficient sharing of the spectrum. Within the same wireless network, sharing among secondary users reduces to a conventional multiple access problem that can be controlled by the base station (BS). Consequently, many access protocols that have been proposed for spectrum sharing among homogeneous secondary users are derived from conventional medium access control (MAC) protocols like ALOHA and carrier sense multiple access (CSMA).

When there are multiple networks sharing a spectrum, this is referred to as spectrum sharing between wireless networks. In the case of networks differing in main system parameters (e.g., radio coverage, transmit power, data rates, channelization, or media access protocols), spectrum sharing becomes especially complex. The main challenge to opportunistic communication in such diverse environments lies in striking a balance between the conflicting goals of minimizing the interference among the secondary users and at the same time maximizing the performance that each system can achieve under some fairness conditions.

Accordingly, as the number of devices increases, the need for proper bandwidth utilization for data and control signaling on licensed as well as unlicensed or shared spectrum becomes more important. Moreover, with the introduction of femtonodes, piconodes, and other semiautonomous base stations for managing femtocells, picocells, and other small cells that are typically deployed to extend cellular coverage indoors and provide more robust wireless coverage for mobile devices, the need to avoid interference with existing base stations and allocate and manage various channels (e.g., unlicensed or shared channels) in systems such as LTE becomes increasingly important.

EP1850543A2 describes a method for communications between neighboring wireless cells such as wireless regional area networks operating according to IEEE 802.22 specifications.

### SUMMARY

The invention relates to a method (600) for inter-operator coexistence on unlicensed bands, a base station apparatus and a computer-readable medium as set forth in the claims. configured to carry coexistence information such that the operators can adjust resource allocation parameters, channel allocation parameters, and/or other suitable parameters used to provide the cellular coverage in the unlicensed bands and thereby enable inter-operator coexistence in the unlicensed bands. For example, in various embodiments, the operators may coordinate the particular OTA signaling configuration used to carry the coexistence information and thereby enable each operator to learn information that the other operator(s) are using and thereby reduce interference on time, frequency, and/or spatial resources that may be shared among the operators providing the cellular coverage in the unlicensed bands. Furthermore, the OTA signaling messages may comprise measurement information that one or more operators obtained on unlicensed channels that one or more other operators are utilizing to provide cellular coverage in the unlicensed bands, wherein a Long Term Evolution (LTE) Self-Organizing Network (SON) entity may use information read from the OTA signaling messages exchanged among the operators to adjust the parameters that the operators utilize to provide the cellular coverage and thereby reduce the interference on the resources that are shared among the operators providing the cellular coverage in the unlicensed bands. Further still, according to various aspects, a user equipment (UE) may be configured to receive and decode the OTA signaling messages exchanged between the operators and to adjust one or more measurement parameters and/or operating parameters according to the coexistence information carried in the OTA signaling messages.

According to various aspects, a method for inter-operator coexistence on unlicensed bands may comprise exchanging one or more over-the-air (OTA) signaling messages between a first base station associated with a first operator and a second base station associated with a second operator, wherein the first operator and the second operator each provide cellular coverage in one or more unlicensed bands, and adjusting one or more parameters that the first base station utilizes to provide the cellular coverage in the one or more unlicensed bands according to the one or more OTA signaling messages, wherein the one or more parameters are adjusted at the first base station to reduce interference on resources that the first operator and the second operator share to provide the cellular coverage in the unlicensed bands.

According to various aspects, an apparatus may comprise means for exchanging one or more OTA signaling messages between a first base station associated with a first operator and a second base station associated with a second operator, wherein the first operator and the second operator each provide cellular coverage in one or more unlicensed bands, and means for adjusting one or more parameters that the first base station utilizes to provide cellular coverage in the one or more unlicensed bands according to the one or more OTA signaling messages, wherein the one or more parameters are adjusted at the first base station to reduce interference on resources that the first operator and the second operator share to provide the cellular coverage in the unlicensed bands.

According to various aspects, a computer-readable storage medium may have computer-executable instructions recorded thereon, wherein executing the computer-executable instructions on one or more processors may cause the one or more processors to exchange more over-the-air (OTA) signaling messages between a first base station associated with a first operator and a second base station associated with a second operator, wherein the first operator and the second operator each provide cellular coverage in one or more unlicensed bands, and to adjust one or more parameters that the first base station utilizes to provide cellular coverage in the one or more unlicensed bands according to the one or more OTA signaling messages, wherein the one or more parameters are adjusted at the first base station to reduce interference on resources that the first operator and the second operator share to provide the cellular coverage in the unlicensed bands.

According to various aspects, a method for wireless communication may comprise decoding, at a user equipment (UE), one or more over-the-air (OTA) signaling messages exchanged between a first operator and a second operator that provide cellular coverage in one or more unlicensed bands, wherein the one or more OTA signaling messages comprise one or more overhead control messages that are configured to carry coexistence information associated with the cellular coverage provided in the unlicensed bands, and adjusting, at the UE, one or more measurement parameters and one or more operating parameters used in the one or more unlicensed bands according to the one or more decoded OTA signaling messages.

Other objects and advantages associated with the aspects and embodiments disclosed herein will be apparent to those skilled in the art based on the accompanying drawings and detailed description.

### BRIEF DESCRIPTION OF THE DRAWINGS

A more complete appreciation of aspects of the disclosure and many of the attendant advantages thereof will be readily obtained as the same becomes better understood by reference to the following detailed description when considered in connection with the accompanying drawings which are presented solely for illustration and not limitation of the disclosure, and in which:
FIG. 1 illustrates an example mixed-deployment wireless communication system including macro cell base stations and small cell base stations.
FIG. 2 is a block diagram illustrating an example downlink frame structure for LTE communications.
FIG. 3 is a block diagram illustrating an example uplink frame structure for LTE communications.
FIG. 4 illustrates exemplary coexistence signaling messages that may be broadcasted in a shared or unlicensed spectrum environment to enable inter-operator coexistence according to various aspects.
FIG. 5 illustrates an example small cell base station with co-located radio components (e.g., LTE and Wi-Fi) configured for unlicensed spectrum operation.
FIG. 6 illustrates an exemplary method for enabling inter-operator coexistence in a shared or unlicensed spectrum environment, according to various aspects.
FIG. 7 is a simplified block diagram of several sample aspects of components that may be employed in communication nodes and configured to support communication as taught herein.
FIGS. 8-9 are other simplified block diagrams of several sample aspects of apparatuses configured to support communication as taught herein.
FIG. 10 illustrates an example communication system environment in which the teachings and structures herein may be incorporated.

### DETAILED DESCRIPTION

Various aspects are disclosed in the following description and related drawings to show specific examples relating to exemplary embodiments. Alternate embodiments will be apparent to those skilled in the pertinent art upon reading this disclosure, and may be constructed and practiced without departing from the scope of the disclosure as defined by the appended claims. Additionally, well-known elements will not be described in detail or may be omitted so as to not obscure the relevant details of the aspects and embodiments disclosed herein.

The word "exemplary" is used herein to mean "serving as an example, instance, or illustration." Any embodiment described herein as "exemplary" is not necessarily to be construed as preferred or advantageous over other embodiments. Likewise, the term "embodiments" does not require that all embodiments include the discussed feature, advantage or mode of operation.

The terminology used herein describes particular embodiments only and should not be construed to limit any embodiments disclosed herein. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Further, many aspects are described in terms of sequences of actions to be performed by, for example, elements of a computing device. It will be recognized that various actions described herein can be performed by specific circuits (e.g., an application specific integrated circuit (ASIC)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

According to various aspects, to enable inter-operator coexistence on shared spectrum or unlicensed bands, operators that deploy cellular coverage in unlicensed bands or other shared spectrum can broadcast over-the-air (OTA) signaling messages that carry coexistence information, whereby other operators can use the coexistence information contained in the OTA signaling messages to adjust resource and/or channel allocation parameters and thereby co-exist with the other operators. Furthermore, operators may coordinate the particular configuration used to carry the coexistence information in the OTA signaling messages and thereby enable the operators to learn information that other operators are using such that the different operators may co-exist in the unlicensed bands. For example, in various embodiments, the coexistence information carried in the OTA signaling messages may indicate unlicensed channels, transmission parameters, radio access technologies, and/or other information that the operators are using to provide service in the unlicensed bands, measurements that the operators may have obtained from other operators providing service in the unlicensed bands, etc.

According to various aspects, certain cellular services may be supported with a multi-cell mode used for multicast/broadcast single frequency network (MBSFN) transmission, which may allow a UE to combine signals received from multiple cells in order to improve reception performance. As such, to mitigate potential mutual interference that can result when multiple operators deploy cellular coverage in unlicensed bands or other shared spectrum, OTA signaling messages exchanged among operators that deploy cellular coverage in unlicensed bands or other shared spectrum can include MBSFN subframes that a base station configures to carry coexistence information on a secondary cell in the unlicensed band. For example, in various embodiments, operators may arrange the particular MBSFN subframe configuration that will be used to carry the coexistence information (e.g., the number of subframes, the phase and periodicity, etc.), thereby enabling the operators to learn the unlicensed channels that the other operators are using, parameters that relate to time-division multiplexing (TDM) patterns (e.g., TDM on/off patterns, TDM pattern phases and periodicities, etc.) that the operators may be using (if any) to co-exist with other operators using the same or different radio access technology (RAT), information on measurements associated with other RATs and/or operators operating on a particular unlicensed channel (e.g., loading, received signal strength indication (RSSI), RAT types, number of operators, etc.), transmit power, cell loading, traffic QoS, or any other information that may be relevant to enabling coexistence among the multiple operators that are operating in unlicensed bands or other shared spectrum.

According to various aspects, the OTA coexistence signaling messages that may be broadcasted in unlicensed or other shared spectrum environments to enable inter-operator coexistence may comprise system information structured according to master information blocks (MIBs) and system information blocks (SIBs). For example, a base station may broadcast a MIB in fixed location time slots, wherein the MIB may include parameters to aid a UE in locating a SIB Type 1 (SIB1) message scheduled on a downlink shared channel (DL-SCH) (e.g., downlink bandwidth and system frame number). The SIB1 message may contain information relevant to scheduling the other system information and information on access to a cell, and other SIBs are multiplexed in system information messages. For example, a SIB Type 2 (SIB2) message contains resource configuration information common to all UEs and information on access barring, wherein the base station may broadcast access class barring parameters in a SIB2 message to control user access and each UE may perform actions according to the access class in a universal subscriber identity module (USIM) associated therewith. In the coexistence context, the OTA signaling messages exchanged among operators that provide cellular coverage in unlicensed bands or other shared spectrum may include a new dedicated message that carries coexistence information and/or information to enable coexistence. For example, in various embodiments, a base station may broadcast a new system information block (SIB_new) configured as a message dedicated to carrying coexistence information or information that otherwise enables coexistence, wherein another base station may receive the SIB_new message and use information read therefrom to adjust resource and/or channel allocation parameters to co-exist with the base station that broadcasted the SIB_new message. Alternatively, in various embodiments, an existing SIB message sent over the secondary cell (e.g., SIB1 message, SIB2 message, etc.) can be reused to carry the coexistence information or the information that otherwise enables coexistence. As such, the base station broadcasting the reused SIB message can override one or more elements or other fields in the existing SIB message and/or add one or more new bits or other fields to the existing SIB message to carry the coexistence information.

According to various aspects, using the OTA signaling messages described above, an LTE Self-Organizing Network (SON) entity that receives the broadcasted OTA signaling messages can use the information read from the base stations that broadcasted the OTA signaling messages to adjust one or more resource and/or channel allocation parameters and thereby enable efficient coexistence with the broadcasting base station. For example, the LTE SON entity may adjust a transmit power, a TDM pattern, a channel number, or other resource and/or channel allocation parameters according to the coexistence information included in the OTA signaling message received from the broadcasting base station. In a similar respect, UEs may benefit from the OTA coexistence signaling messages to support more efficient coexistence. For example, a UE that receives and decodes the OTA coexistence signaling messages may adjust one or more measurement parameters based on the information carried therein (e.g., measuring the unlicensed channel and/or the particular radio access technology that the broadcasting base station may be using in the unlicensed bands). In another example, the UE may adjust operating parameters based on the information carried in the coexistence signaling messages (e.g., switching channels based on the coexistence information that may relate to cell loading or traffic QoS, making adjustments based on the transmit power and/or TDM pattern that the broadcasting base station may be using in the unlicensed bands, etc.).

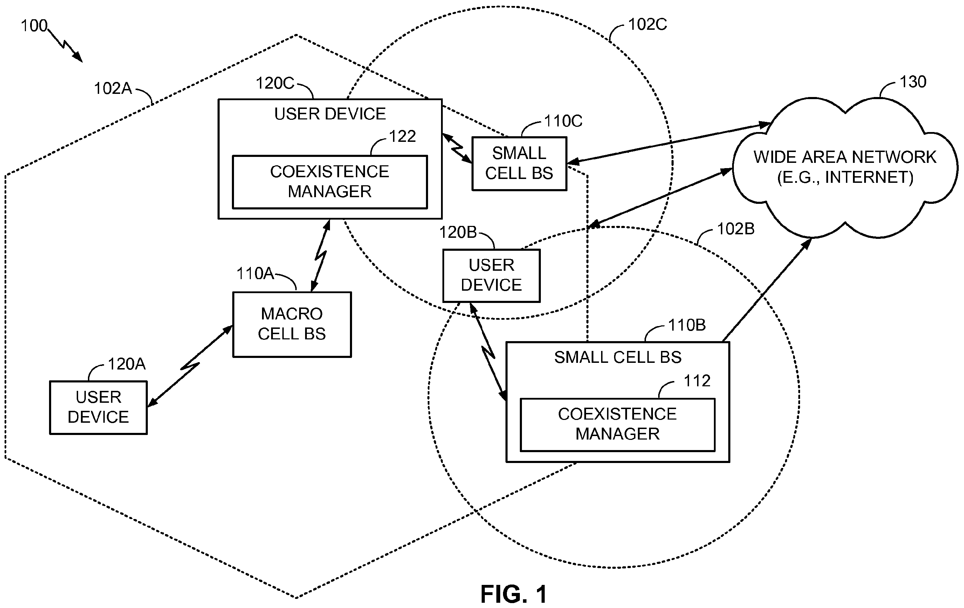

FIG. 1 illustrates an example mixed-deployment wireless communication system, in which small cell base stations are deployed in conjunction with and to supplement the coverage of macro cell base stations. As used herein, small cells generally refer to a class of low-powered base stations that may include or be otherwise referred to as femto cells, pico cells, micro cells, etc. As noted in the background above, they may be deployed to provide improved signaling, incremental capacity growth, richer user experience, and so on.

The illustrated wireless communication system 100 is a multiple-access system that is divided into a plurality of cells 102 and configured to support communication for a number of users. Communication coverage in each of the cells 102 is provided by a corresponding base station 110, which interacts with one or more user devices 120 via DownLink (DL) and/or UpLink (UL) connections. In general, the DL corresponds to communication from a base station to a user device, while the UL corresponds to communication from a user device to a base station. In the example shown in FIG. 1, the different base stations 110 include an example macro cell base station 110A and two example small cell base stations 110B, 110C. The macro cell base station 110A is configured to provide communication coverage within a macro cell coverage area 102A, which may cover a few blocks within a neighborhood or several square miles in a rural environment. Meanwhile, the small cell base stations 110B, 110C are configured to provide communication coverage within respective small cell coverage areas 102B, 102C, with varying degrees of overlap existing among the different coverage areas. In some systems, each cell may be further divided into one or more sectors (not shown).

As used herein, the terms "user device" and "base station" are not intended to be specific or otherwise limited to any particular Radio Access Technology (RAT), unless otherwise noted. In general, such user devices may be any wireless communication device (e.g., a mobile phone, router, personal computer, server, etc.) used by a user to communicate over a communications network, and may be alternatively referred to in different RAT environments as an Access Terminal (AT), a Mobile Station (MS), a Subscriber Station (STA), a User Equipment (UE), etc. Similarly, a base station may operate according to one of several RATs in communication with user devices depending on the network in which the base station is deployed, and may be alternatively referred to as an Access Point (AP), a Network Node, a NodeB, an evolved NodeB (eNB), etc. In addition, in some systems a base station may provide purely edge node signaling functions while in other systems a base station may provide additional control and/or network management functions.

Turning to the illustrated connections in more detail, the user device 120A may transmit and receive messages via a wireless link with the macro cell base station 110A, the message including information related to various types of communication (e.g., voice, data, multimedia services, associated control signaling, etc.). The user device 120B may similarly communicate with the small cell base station 110B via another wireless link, and the user device 120C may similarly communicate with the small cell base station 110C via another wireless link. In addition, in some scenarios, the user device 120C, for example, may also communicate with the macro cell base station 110A via a separate wireless link in addition to the wireless link that the user device 120C maintains with the small cell base station 110C.

As is further illustrated in FIG. 1, the macro cell base station 110A may communicate with a corresponding wide area or external network 130, via a wired link or via a wireless link, while the small cell base stations 110B, 110C may also similarly communicate with the network 130, via their own wired or wireless links. For example, the small cell base stations 110B, 110C may communicate with the network 130 by way of an Internet Protocol (IP) connection, such as via a Digital Subscriber Line (DSL, e.g., including Asymmetric DSL (ADSL), High Data Rate DSL (HDSL), Very High Speed DSL (VDSL), etc.), a TV cable carrying IP traffic, a Broadband over Power Line (BPL) connection, an Optical Fiber (OF) cable, a satellite link, or some other link.

The network 130 may comprise any type of electronically connected group of computers and/or devices, including, for example, Internet, Intranet, Local Area Networks (LANs), or Wide Area Networks (WANs). In addition, the connectivity to the network may be, for example, by remote modem, Ethernet (IEEE 802.3), Token Ring (IEEE 802.5), Fiber Distributed Datalink Interface (FDDI) Asynchronous Transfer Mode (ATM), Wireless Ethernet (IEEE 802.11), Bluetooth (IEEE 802.15.1), or some other connection. As used herein, the network 130 includes network variations such as the public Internet, a private network within the Internet, a secure network within the Internet, a private network, a public network, a value-added network, an intranet, and the like. In certain systems, the network 130 may also comprise a Virtual Private Network (VPN).

Accordingly, those skilled in the art will appreciate that the macro cell base station 110A and/or either or both of the small cell base stations 110B, 110C may be connected to the network 130 using any of a multitude of devices or methods. These connections may be referred to as the "backbone" or the "backhaul" of the network, and may in some implementations be used to manage and coordinate communications between the macro cell base station 110A, the small cell base station 110B, and/or the small cell base station 110C. In this way, as a user device moves through such a mixed communication network environment that provides both macro cell and small cell coverage, the user device may be served in certain locations by macro cell base stations, at other locations by small cell base stations, and, in some scenarios, by both macro cell and small cell base stations.

For their wireless air interfaces, each base station 110 may operate according to one of several RATs depending on the network in which the base station 110 is deployed. These networks may include, for example, Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, and so on. The terms "network" and "system" are often used interchangeably. A CDMA network may implement a RAT such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a RAT such as Global System for Mobile Communications (GSM). An OFDMA network may implement a RAT such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is a release of UMTS that uses E-UTRA. UTRA, E-UTRA, GSM, UMTS, and LTE are described in documents from an organization named "3rd Generation Partnership Project" (3GPP). cdma2000 is described in documents from an organization named "3rd Generation Partnership Project 2" (3GPP2). These documents are publicly available.

Furthermore, as described in further detail herein, the different entities shown in FIG. 1 may be configured to provide or otherwise support inter-operator coexistence on unlicensed bands or other shared spectrum as discussed briefly above. For example, according to various aspects, cellular systems such as LTE are typically confined to one or more licensed frequency bands that have been reserved for such communications (e.g., by a government entity such as the Federal Communications Commission (FCC) in the United States). However, certain communication systems, in particular those employing small cell base stations as in the design of FIG. 1, have extended cellular operations into unlicensed frequency bands such as the Unlicensed National Information Infrastructure (U-NII) band used by Wireless Local Area Network (WLAN) technologies. For illustration purposes, the description below may refer in some respects to an LTE system operating on an unlicensed band by way of example when appropriate, although those skilled in the art will appreciate that such descriptions are not intended to exclude other cellular communication technologies. LTE on an unlicensed band may also be referred to herein as LTE / LTE-Advanced in unlicensed spectrum, or simply LTE in the surrounding context. The unlicensed spectrum may be employed by cellular systems in different ways. For example, in some systems, the unlicensed spectrum may be employed in a standalone configuration, with all carriers operating exclusively in an unlicensed portion of the wireless spectrum (e.g., LTE Standalone). In other systems, the unlicensed spectrum may be employed in a manner that is supplemental to licensed band operation by utilizing one or more unlicensed carriers operating in the unlicensed portion of the wireless spectrum in conjunction with an anchor licensed carrier operating in the licensed portion of the wireless spectrum (e.g., LTE Supplemental DownLink (SDL))

In either case, carrier aggregation may be employed to manage the different component carriers, with one carrier serving as the Primary Cell (PCell) for the corresponding user (e.g., an anchor licensed carrier in LTE SDL or a designated one of the unlicensed carriers in LTE Standalone) and the remaining carriers serving as respective Secondary Cells (SCells). In this way, the PCell may provide a Frequency Division Duplexed (FDD) pair of downlink and uplink carriers (licensed or unlicensed), with each SCell providing additional downlink capacity as desired. Furthermore, there are two supported radio frame structures that organize downlink and uplink frame structures into radio frames, which include a Type 1 frame structure applicable to FDD configurations and a Type 2 frame structure applicable to Time Division Duplexed (TDD) configurations in which different uplink-downlink configurations designate downlink subframes that are reserved to downlink transmissions, uplink subframes that are reserved to uplink transmissions, and special subframes used when switching from the downlink to the uplink to avoid possible interference from other downlink neighbors. In that context, as described in the publicly available LTE standard described in 3GPP TS 36.211, entitled "Evolved Universal Terrestrial Radio Access (E-UTRA); Physical Channels and Modulation," transmissions in multiple cells can be aggregated where up to four SCells can be used in addition to the PCell, where different frame structures (e.g., Type 1 vs. Type 2) can be used in the different serving cells in the case of multi-cell aggregation.

Accordingly, when there are multiple operators deploying cellular coverage in unlicensed bands, the operators can share spatial resources due at least in part to the fact that different base stations 110 can provide communication coverage in overlapping coverage areas 102. Furthermore, the multiple operators can share frequency resources due at least in part to the fact that different base stations 110 can provide communication coverage in overlapping coverage areas 102. Furthermore, the multiple operators can share frequency resources in that the operators utilize the same unlicensed carriers, and the multiple operators can further share time resources in that the operators may employ TDD configurations such that downlink and/or uplink transmission slots may be shared at different base stations 110 despite the base stations 110 operating in different unlicensed carriers. As such, due to the possibility that multiple operators may deploy cellular coverage in unlicensed bands, there could be mutual interference between the operators.

Accordingly, in the wireless communication system 100 shown in FIG. 1, one or more of the base stations 110 may include a local coexistence manager 112 that can be used to exchange (i.e., broadcast and receive) over-the-air (OTA) coexistence signaling messages with other operators providing cellular coverage in unlicensed bands and/or other shared spectrum such that resource and/or channel allocation parameters can be adjusted accordingly to enable coexistence in the unlicensed bands. For example, in various embodiments, the OTA coexistence signaling messages may comprise an overhead control message (e.g., a System Information Block transmitted in an MBSFN subframe), which may indicate one or more unlicensed channels that the base stations 110 are using, any TDM patterns that the base stations 110 are using to coexist with other operators on the same radio access technology or a different radio access technology, information on measurements from other radio access technologies and/or operators on a particular unlicensed channel, and/or other suitable information that can enable coexistence among the operators. Furthermore, according to various aspects, one or more of the user devices 120 may include a local coexistence management module 122 that can read and decode the OTA coexistence signaling messages exchanged among the operators providing cellular coverage in the unlicensed bands such that the user devices 120 can adjust measurement and/or operating parameters accordingly. For example, the user devices 120 can adjust parameters used to measure the unlicensed channels and/or radio access technologies used in the base stations 110 broadcasting the OTA signaling messages, switch channels based on coexistence information that may relate to cell loading or traffic QoS, make appropriate adjustments based on a transmit power and/or TDM pattern that the base stations 110 broadcasting the OTA signaling messages are using in the unlicensed bands, and so on.

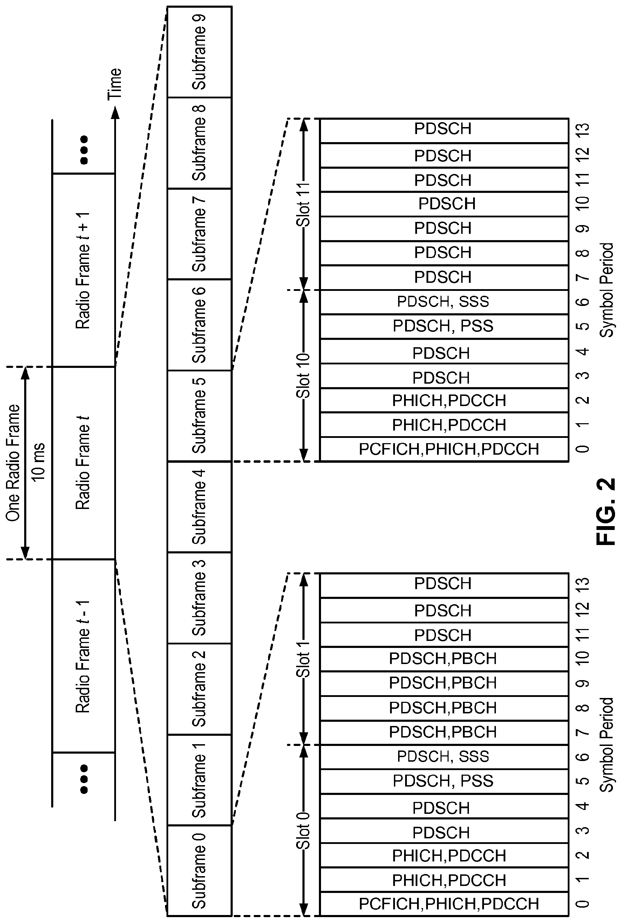

For illustration purposes, an example downlink and uplink frame structure for an LTE signaling scheme is described below with reference to FIGS. 2 - 3.

FIG. 2 is a block diagram illustrating an example downlink frame structure for LTE communications. In LTE, the base stations 110 of FIG. 1 are generally referred to as eNBs and the user devices 120 are generally referred to as UEs. The transmission timeline for the downlink may be partitioned into units of radio frames. Each radio frame may have a predetermined duration (e.g., 10 milliseconds (ms)) and may be partitioned into 10 subframes with indices of 0 through 9. Each subframe may include two slots. Each radio frame may thus include 20 slots with indices of 0 through 19. Each slot may include L symbol periods, e.g., 7 symbol periods for a normal cyclic prefix (as shown in FIG. 2) or 6 symbol periods for an extended cyclic prefix. The 2L symbol periods in each subframe may be assigned indices of 0 through 2L-1. The available time frequency resources may be partitioned into resource blocks. Each resource block may cover N subcarriers (e.g., 12 subcarriers) in one slot.

In LTE, an eNB may send a Primary Synchronization Signal (PSS) and a Secondary Synchronization Signal (SSS) for each cell in the eNB. The PSS and SSS may be sent in symbol periods 5 and 6, respectively, in each of subframes 0 and 5 of each radio frame with the normal cyclic prefix, as shown in FIG. 2. The synchronization signals may be used by UEs for cell detection and acquisition. The eNB may send a Physical Broadcast Channel (PBCH) in symbol periods 0 to 3 in slot 1 of subframe 0. The PBCH may carry certain system information.

Reference signals are transmitted during the first and fifth symbol periods of each slot when the normal cyclic prefix is used and during the first and fourth symbol periods when the extended cyclic prefix is used. For example, the eNB may send a Cell-specific Reference Signal (CRS) for each cell in the eNB on all component carriers. The CRS may be sent in symbols 0 and 4 of each slot in case of the normal cyclic prefix, and in symbols 0 and 3 of each slot in case of the extended cyclic prefix. The CRS may be used by UEs for coherent demodulation of physical channels, timing and frequency tracking, Radio Link Monitoring (RLM), Reference Signal Received Power (RSRP), and Reference Signal Received Quality (RSRQ) measurements, etc.

The eNB may send a Physical Control Format Indicator Channel (PCFICH) in the first symbol period of each subframe, as seen in FIG. 2. The PCFICH may convey the number of symbol periods (M) used for control channels, where M may be equal to 1, 2, or 3 and may change from subframe to subframe. M may also be equal to 4 for a small system bandwidth, e.g., with less than 10 resource blocks. In the example shown in FIG. 2, M=3. The eNB may send a Physical HARQ Indicator Channel (PHICH) and a Physical Downlink Control Channel (PDCCH) in the first M symbol periods of each subframe. The PDCCH and PHICH are also included in the first three symbol periods in the example shown in FIG. 2. The PHICH may carry information to support Hybrid Automatic Repeat Request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink. The various signals and channels in LTE are described in 3GPP TS 36.211, entitled "Evolved Universal Terrestrial Radio Access (E-UTRA); Physical Channels and Modulation," which is publicly available.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs, and may also send the PDSCH in a unicast manner to specific UEs.

A number of resource elements may be available in each symbol period. Each resource element may cover one subcarrier in one symbol period and may be used to send one modulation symbol, which may be a real or complex value. Resource elements not used for a reference signal in each symbol period may be arranged into Resource Element Groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 32, or 64 REGs, which may be selected from the available REGs, in the first M symbol periods. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

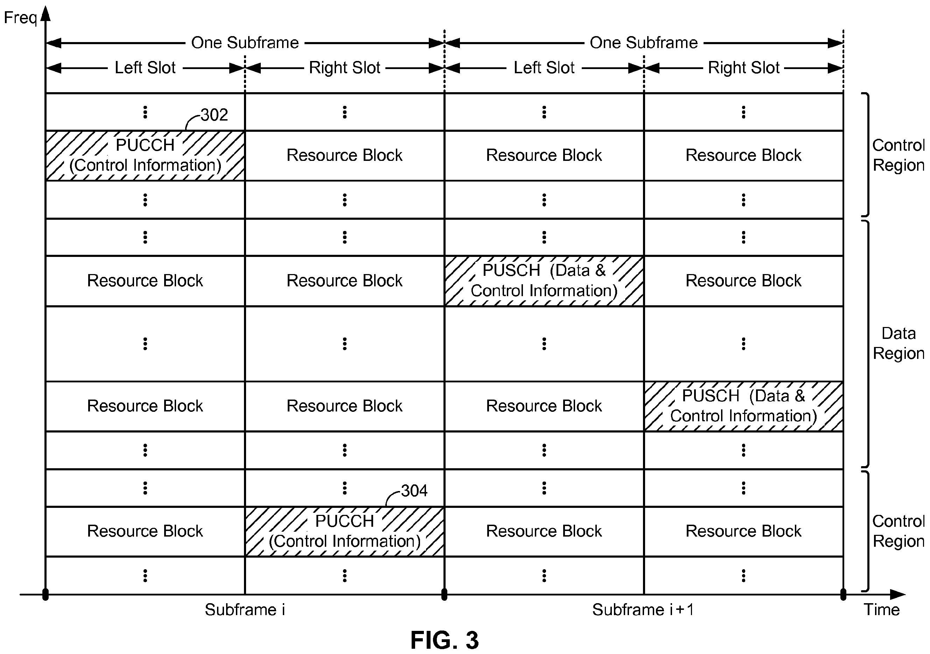

FIG. 3 is a block diagram illustrating an example uplink frame structure for LTE communications. The available resource blocks (which may be referred to as RBs) for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The design in FIG. 3 results in the data section including contiguous subcarriers, which may allow a single UE to be assigned all of the contiguous subcarriers in the data section.

A UE may be assigned resource blocks in the control section to transmit control information to an eNB. The UE may also be assigned resource blocks in the data section to transmit data to the eNB. The UE may transmit control information in a Physical Uplink Control Channel (PUCCH) on the assigned resource blocks in the control section. The UE may transmit only data or both data and control information in a Physical Uplink Shared Channel (PUSCH) on the assigned resource blocks in the data section. An uplink transmission may span both slots of a subframe and may hop across frequency as shown in FIG. 3.

Accordingly, in the OTA coexistence signaling context mentioned above, operators that deploy LTE cellular coverage in unlicensed bands can arrange an MBSFN subframe configuration (e.g., the number of subframes, the phase and periodicity, etc.) and configure the arranged MBSFN subframes to carry the OTA coexistence signaling on an SCell in the unlicensed bands. For example, in an FDD configuration, subframes 0, 4, 5, and 9 are generally used for paging, depending on a defined paging cycle, whereby subframes 1, 2, 3, 6, 7, and/or 8 can be configured as the MBSFN subframes to carry the OTA coexistence signaling in an FDD configuration.

Alternatively, in a TDD configuration, subframes 0, 1, 5, and 6 are generally used for paging, depending on the defined paging cycle, while each TDD uplink-downlink configuration reserves subframe 2 to uplink transmissions, whereby subframes 3, 4, 7, 8, and/or 9 can be configured as the MBSFN subframes to carry the OTA coexistence signaling in a TDD configuration.

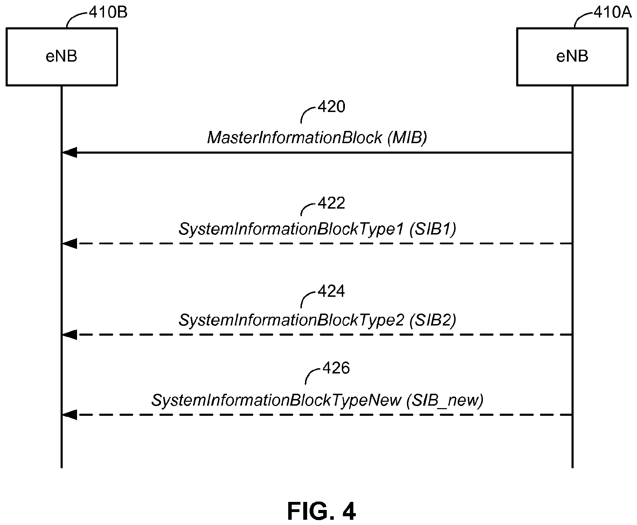

According to various aspects, referring now to FIG. 4, exemplary coexistence signaling messages that may be broadcasted in a shared or unlicensed spectrum environment to enable inter-operator coexistence are illustrated therein. For example, where multiple operators deploy LTE cellular coverage in unlicensed bands or another shared spectrum, which can result in mutual interference between the multiple operators, operators that deploy LTE cellular coverage in unlicensed bands or another shared spectrum can exchange the OTA signaling messages to enable coexistence, wherein the OTA signaling messages may include the MBSFN subframes that eNBs configure on the SCell in the unlicensed band. For example, as mentioned above, operators may arrange the particular MBSFN subframe configuration that will be used to carry the OTA signaling messages (e.g., the number of subframes, the phase and periodicity, etc.), thereby enabling the various operators to learn the unlicensed channels that the other operators are using, any time-division multiplexing (TDM) patterns that the operators may be using to co-exist with other operators using the same or different radio access technology (RAT) (e.g., TDM on/off patterns, TDM pattern phases and periodicities, etc.), information on measurements associated with other RATs and/or operators operating on a particular unlicensed channel (e.g., loading, received signal strength indication (RSSI), RAT types, number of operators, etc.), transmit power, cell loading, traffic QoS, or any other information that may be relevant to enabling coexistence among the multiple operators that are operating in unlicensed bands or other shared spectrum.

According to various embodiments, the OTA signaling messages may be exchanged in one or more overhead control messages. For example, in a specific implantation, the OTA signaling messages may be exchanged as shown in FIG. 4, where system information may be provided by radio resource control (RRC) and structured in master information blocks (MIBs) and system information blocks (SIBs). A MIB 420 is broadcasted in fixed location time slots by an eNB 410A and includes parameters to aid a UE (not shown) in locating a SIB Type 1 (SIB1) message 422 scheduled on the DL-SCH (e.g., DL bandwidth and system frame number). The SIB1 message 422 contains information relevant to scheduling the other system information and information on access to a cell. The other SIBs are multiplexed in system information messages. A SIB Type 2 (SIB2) message 424 contains resource configuration information that is common to all UEs and information on access barring. The eNB 410A controls user access by broadcasting access class barring parameters in a SIB2 message 424, and the UE performs actions according to the access class in a universal subscriber identity module (USIM).

All UEs that are members of access classes one to ten are randomly allocated mobile populations, defined as access classes 0 to 9. The population number is stored in the SIM/USIM. In addition, UEs may be members of one or more of five special categories (access classes 11 to 15) also held in the SIM/USIM. The 3GPP TS 22.011 standard defines these access classes in Section 4.2, wherein a SIB2 message contains various parameters for access control (e.g., for regular users with Access Class 0 to 9, the access is controlled by ac-BarringFactor and ac-BarringTime parameters in the SIB2 message, for users initiating emergency calls (AC 10), the access is controlled by the ac-BarringForEmergency parameter indicating whether access barring is enforced or not enforced, for UEs with AC 11 to 15, the access is controlled by the ac-BarringForSpecialAC parameter indicating whether access barring is enforced or not enforced, etc.). Accordingly, a UE is allowed to perform access procedures when the UE is a member of at least one access class that corresponds to the permitted classes as signaled over the air interface. The UEs generate a random number to pass the "persistent" test in order for the UE to gain access. To gain access, a UE random number generator's outcome needs to be lower than the threshold set in the ac-BarringFactor. By setting the ac-BarringFactor to a lower value, the access from regular users is restricted. The users with access class 11 to 15 can gain access without any restriction.

In the coexistence context, the OTA signaling that operators deploying cellular coverage in shared or unlicensed bands may include a new dedicated message that carries information on coexistence or to enable coexistence. For example, in one embodiment, the eNB 410A may broadcast a new system information block (SIB_new) 426 that may be configured as a dedicated message that carries coexistence information or otherwise enables coexistence, wherein another eNB 410B may receive the SIB_new message 426 and use information read therefrom to adjust resource and/or channel allocation parameters to co-exist with the eNB 410A. Alternatively, in one embodiment, the eNB 410A can reuse an existing SIB message sent over the secondary cell (e.g., SIB1 message 422, SIB2 message 424, etc.). As such, the eNB 410A can override one or more elements or other fields in the existing SIB message and/or add one or more new bits or other fields to the existing SIB message to carry coexistence information.

Accordingly, using the OTA signaling messages, an LTE Self-Organizing Network (SON) entity that receives the broadcasted OTA signaling messages can use the information read from the broadcasting eNB 410A to adjust one or more resource and/or channel allocation parameters to enable efficient coexistence with the broadcasting eNB 410A. For example, in one embodiment, the LTE SON entity may adjust a transmit power, a TDM pattern, a channel number, or other resource and/or channel allocation parameters according to the coexistence information included in the OTA signaling message that the eNB 410A broadcasted. In a similar respect, one or more UEs may benefit from the OTA signaling messages that the eNB 410A broadcasts to support more efficient coexistence. For example, a UE that receives and decodes the broadcasted OTA signaling messages may adjust one or more measurement parameters based on the information carried therein (e.g., measuring the unlicensed channel that the eNB 410A may be using in the unlicensed bands, obtaining measurements associated with the radio access technology that the eNB 410A may be using in the unlicensed bands, etc.). In another example, the UE may adjust one or more operating parameters based on the information carried in the broadcasted OTA signaling messages (e.g., switching channels based on the information that relates to cell loading or traffic QoS, making adjustments based on the transmit power and/or TDM pattern that the eNB 410A may be using in the unlicensed bands, etc.).

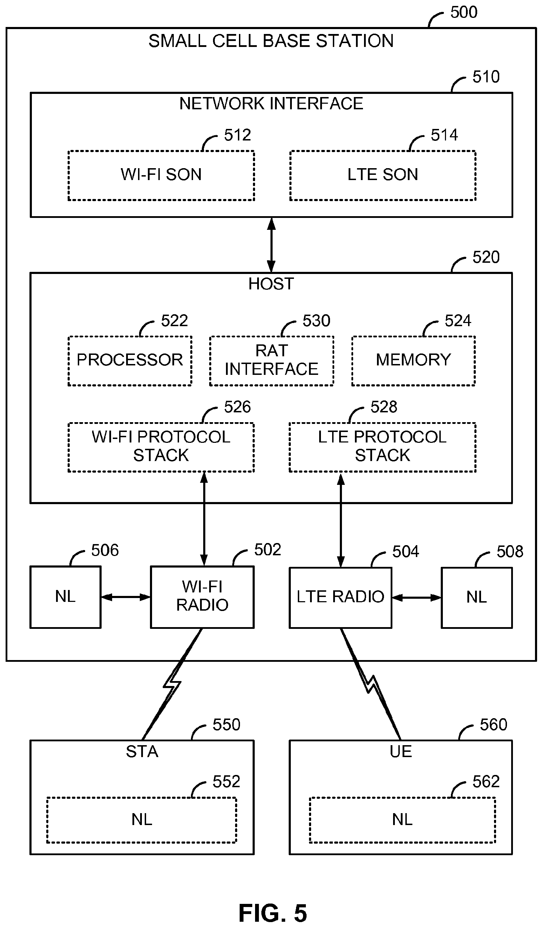

FIG. 5 illustrates an example small cell base station with co-located radio components configured for unlicensed spectrum operation. In particular, as mentioned above, the extension of small cell operation into unlicensed frequency bands such as the U-NII (5 GHz) band may be implemented in various ways to increase the capacity of cellular systems such as LTE. However, as further discussed briefly above, extending small cell operation into unlicensed frequency bands may also encroach on the operations of other "native" RATs that typically utilize the same unlicensed band, most notably IEEE 802.11x WLAN technologies generally referred to as "Wi-Fi." In some small cell base station designs, the small cell base station may include such a native RAT radio co-located with a cellular radio. According to various aspects described herein, the small cell base station may leverage the co-located radio to facilitate coexistence between the different RATs when operating on a shared unlicensed band. For example, the co-located radio may be used to conduct different measurements on the unlicensed band and dynamically determine the extent to which the unlicensed band is being utilized by devices operating in accordance with the native RAT. The cellular radio's use of the shared unlicensed band may then be specially adapted to balance the desire for efficient cellular operation against the need for stable coexistence.

In FIG. 5, the small cell base station 500 may correspond, for example, to one of the small cell base stations 110B, 110C illustrated in FIG. 1. In this example, the small cell base station 500 is configured to provide a WLAN air interface (e.g., in accordance with an IEEE 802.11x protocol) in addition to a cellular air interface (e.g., in accordance with an LTE protocol). For illustration purposes, the small cell base station 500 is shown as including an 802.11x radio component / module (e.g., transceiver) 502 co-located with an LTE radio component / module (e.g., transceiver) 504.

As used herein, the term co-located (e.g., radios, base stations, transceivers, etc.) may include in accordance with various aspects, one or more of, for example: components that are in the same housing; components that are hosted by the same processor; components that are within a defined distance of one another; and/or components that are connected via an interface (e.g., an Ethernet switch) where the interface meets the latency requirements of any required inter-component communication (e.g., messaging). In some designs, the advantages discussed herein may be achieved by adding a radio component of the native unlicensed band RAT of interest to a given cellular small cell base station without that base station necessarily providing corresponding communication access via the native unlicensed band RAT (e.g., adding a Wi-Fi chip or similar circuitry to an LTE small cell base station). If desired, a low functionality Wi-Fi circuit may be employed to reduce costs (e.g., a Wi-Fi receiver simply providing low-level sniffing).

Returning to FIG. 5, the Wi-Fi radio 502 and the LTE radio 504 may perform monitoring of one or more channels (e.g., on a corresponding carrier frequency) to perform various corresponding operating channel or environment measurements (e.g., CQI, RSSI, RSRP, or other RLM measurements) using corresponding Network / Neighbor Listen (NL) modules 506 and 508, respectively, or any other suitable component(s).

The small cell base station 500 may communicate with one or more user devices via the Wi-Fi radio 502 and the LTE radio 504, illustrated as an STA 550 and a UE 560, respectively. Similar to the Wi-Fi radio 502 and the LTE radio 504, the STA 550 includes a corresponding NL module 552 and the UE 560 includes a corresponding NL module 562 for performing various operating channel or environment measurements, either independently or under the direction of the Wi-Fi radio 502 and the LTE radio 504, respectively. In this regard, the measurements may be retained at the STA 550 and/or the UE 560, or reported to the Wi-Fi radio 502 and the LTE radio 504, respectively, with or without any pre-processing being performed by the STA 550 or the UE 560.

While FIG. 5 shows a single STA 550 and a single UE 560 for illustration purposes, those skilled in the art will appreciate that the small cell base station 500 can communicate with multiple STAs and/or UEs. Additionally, while FIG. 5 illustrates one type of user device communicating with the small cell base station 500 via the Wi-Fi radio 502 (i.e., the STA 550) and another type of user device communicating with the small cell base station 500 via the LTE radio 504 (i.e., the UE 560), those skilled in the art will appreciate that a single user device (e.g., a smartphone) may be capable of communicating with the small cell base station 500 via both the Wi-Fi radio 502 and the LTE radio 504, either simultaneously or at different times.

As is further illustrated in FIG. 5, the small cell base station 500 may also include a network interface 510, which may include various components for interfacing with corresponding network entities (e.g., Self-Organizing Network (SON) nodes), such as a component for interfacing with a Wi-Fi SON 512 and/or a component for interfacing with an LTE SON 514. The small cell base station 500 may also include a host 520, which may include one or more general purpose controllers or processors 522 and memory 524 configured to store related data and/or instructions. The host 520 may perform processing in accordance with the appropriate RAT(s) used for communication (e.g., via a Wi-Fi protocol stack 526 and/or an LTE protocol stack 528), as well as other functions for the small cell base station 500. In particular, the host 520 may further include a RAT interface 530 (e.g., a bus or the like) that enables the radios 502 and 504 to communicate with one another via various message exchanges.

According to various embodiments, where the small cell base station 500 receives one or more OTA signaling messages broadcasted from another operator, the LTE SON 514 can use the information read therefrom to adjust one or more resource and/or channel allocation parameters at the small cell base station 500 to enable coexistence with the broadcasting operator. For example, in one embodiment, the LTE SON 514 may adjust a transmit power, a TDM pattern, a channel number, or other resource and/or channel allocation parameters according to the coexistence information included in the OTA signaling message detected at the small cell base station 500. In a similar respect, the STA 550, UE 560, etc. may benefit from the OTA signaling messages, wherein if the STA 550, UE 560, etc. receives and decodes the broadcasted OTA signaling messages, the STA 550, UE 560, etc. may adjust one or more measurement parameters and/or operating parameters based on the information carried in the broadcasted OTA signaling messages. Furthermore, the small cell base station 500 may broadcast one or more OTA signaling messages that include information to enable coexistence on the unlicensed bands to other operators (e.g., via LTE radio 504).

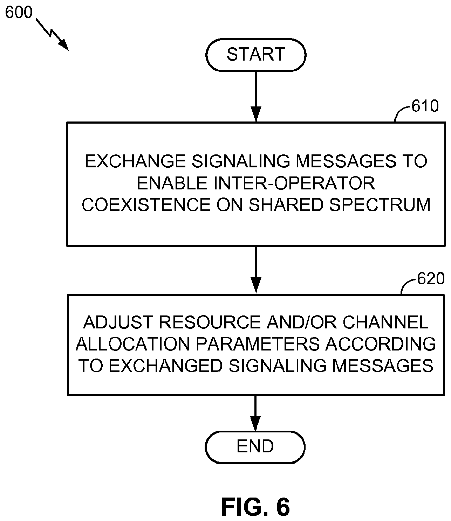

According to various aspects, FIG. 6 illustrates an exemplary method 600 for enabling inter-operator coexistence in a shared or unlicensed spectrum environment. More particularly, at block 610, one or more over-the-air (OTA) signaling messages may be exchanged between a first base station associated with a first operator and a second base station associated with a second operator, where the first operator and the second operator each provide cellular coverage in one or more unlicensed bands. In various embodiments, the one or more OTA signaling messages exchanged at block 610 may comprise any suitable overhead control message that can be configured to carry coexistence information associated with the cellular coverage provided in the unlicensed bands. For example, in one embodiment, the one or more overhead control messages may comprise one or more System Information Block (SIB) messages dedicated to carrying the coexistence information associated with the cellular coverage provided in the unlicensed bands. In another example, the one or more overhead control messages may comprise one or more System Information Block Type 1 (SIB1) messages that are sent over a secondary cell and have one or more fields configured to carry the coexistence information. Furthermore, in various embodiments, the one or more overhead control messages exchanged at block 610 may be sent over a secondary cell according to a Multicast Broadcast Single Frequency Network (MBSFN) subframe configuration arranged between the first operator and the second operator.

In various embodiments, at block 620, one or more parameters that the first base station utilizes to provide the cellular coverage in the one or more unlicensed bands may then be adjusted according to the one or more OTA signaling messages, wherein the one or more parameters are adjusted at the first base station to reduce interference on resources that the first operator and the second operator share to provide the cellular coverage in the unlicensed bands. For example, in various embodiments, the resources that the first operator and the second operator share to provide the cellular coverage in the unlicensed bands may comprise time resources, frequency resources, or spatial resources. Accordingly, the coexistence information carried in the OTA signaling messages exchanged at block 610 may comprise unlicensed channels, Time-Division Multiplexing (TDM) patterns, radio access technologies, transmission power, cell loading information, or traffic quality of service (QoS) information associated with the cellular coverage that the first operator and/or the second operator provide in the unlicensed bands and may optionally further comprise measurement information obtained on an unlicensed channel that a third operator utilizes to provide cellular coverage in the unlicensed bands. Accordingly, at block 620, a Long Term Evolution (LTE) Self-Organizing Network (SON) entity may configure the one or more adjusted parameters that the first base station utilizes to provide the cellular coverage in the one or more unlicensed bands according to the one or more OTA signaling messages. For example, the LTE SON entity may have a centralized architecture implemented at Operations, Administrations, and Management (OAM), a distributed architecture where the first operator and the second operator each include a local LTE SON entity, or a hybrid architecture in which local LTE SON entities at the first operator and the second operator communicate with an LTE SON entity implemented at OAM.

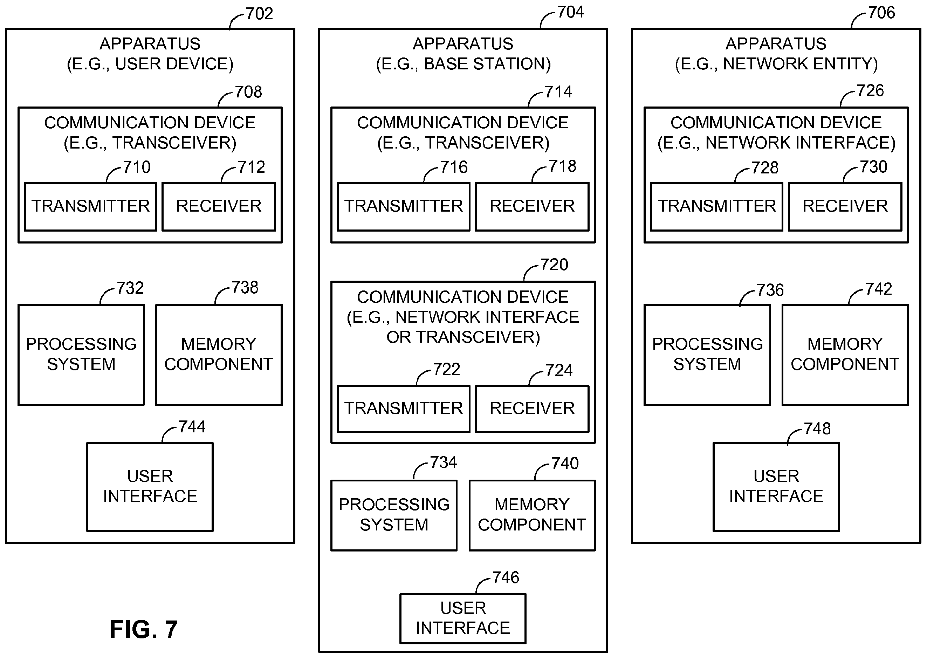

FIG. 7 illustrates several sample components (represented by corresponding blocks) that may be incorporated into an apparatus 702, an apparatus 704, and an apparatus 706 (corresponding to, for example, a user device, a base station, and a network entity, respectively) to support the inter-operator coexistence signaling mechanisms as taught herein. Those skilled in the art will appreciate that these components may be implemented in different types of apparatuses in different implementations (e.g., in an ASIC, in an SoC, etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The apparatus 702 and the apparatus 704 each include at least one wireless communication device (represented by the communication devices 708 and 714 (and the communication device 720 if the apparatus 704 is a relay)) for communicating with other nodes via at least one designated RAT. Each communication device 708 includes at least one transmitter (represented by the transmitter 710) for transmitting and encoding signals (e.g., messages, indications, information, and so on) and at least one receiver (represented by the receiver 712) for receiving and decoding signals (e.g., messages, indications, information, pilots, and so on). Similarly, each communication device 714 includes at least one transmitter (represented by the transmitter 716) for transmitting signals (e.g., messages, indications, information, pilots, and so on) and at least one receiver (represented by the receiver 718) for receiving signals (e.g., messages, indications, information, and so on). If the apparatus 704 is a relay station, each communication device 720 may include at least one transmitter (represented by the transmitter 722) for transmitting signals (e.g., messages, indications, information, pilots, and so on) and at least one receiver (represented by the receiver 724) for receiving signals (e.g., messages, indications, information, and so on).

A transmitter and a receiver may comprise an integrated device (e.g., embodied as a transmitter circuit and a receiver circuit of a single communication device) in some implementations, may comprise a separate transmitter device and a separate receiver device in some implementations, or may be embodied in other ways in other implementations. A wireless communication device (e.g., one of multiple wireless communication devices) of the apparatus 704 may also comprise a Network Listen Module (NLM) or the like for performing various measurements.

The apparatus 706 (and the apparatus 704 if not a relay station) includes at least one communication device (represented by the communication device 726 and, optionally, 720) for communicating with other nodes. For example, the communication device 726 may comprise a network interface that is configured to communicate with one or more network entities via a wire-based or wireless backhaul. In some aspects, the communication device 726 may be implemented as a transceiver configured to support wire-based or wireless signal communication. This communication may involve, for example, sending and receiving: messages, parameters, or other types of information. Accordingly, in the example of FIG. 7, the communication device 726 is shown as comprising a transmitter 728 and a receiver 730. Similarly, if the apparatus 704 is not a relay station, the communication device 720 may comprise a network interface that is configured to communicate with one or more network entities via a wire-based or wireless backhaul. As with the communication device 726, the communication device 720 is shown as comprising a transmitter 722 and a receiver 724.

The apparatuses 702, 704, and 706 also include other components that may be used in conjunction with the inter-operator coexistence signaling mechanisms as taught herein. The apparatus 702 includes a processing system 732 for providing functionality relating to, for example, receiving and decoding inter-operator signaling messages to enable coexistence in unlicensed bands and/or other shared spectrum and for adjusting measurement and/or operating parameters associated with the apparatus 702 accordingly and for providing other processing functionality. The apparatus 704 includes a processing system 734 for providing functionality relating to, for example, coordinating mechanisms to exchange inter-operator signaling messages to enable coexistence in unlicensed bands and/or other shared spectrum with other operators, transmitting and receiving such inter-operator coexistence signaling messages, adjusting resource and/or channel parameters accordingly, and for providing other processing functionality. The apparatus 706 includes a processing system 736 for providing various processing functions to support the inter-operator coexistence signaling mechanisms as taught herein and for providing other processing functionality. The apparatuses 702, 704, and 706 include memory components 738, 740, and 742 (e.g., each including a memory device), respectively, for maintaining information (e.g., information indicative of reserved resources, thresholds, parameters, and so on). In addition, the apparatuses 702, 704, and 706 include user interface devices 744, 746, and 748, respectively, for providing indications (e.g., audible and/or visual indications) to a user and/or for receiving user input (e.g., upon user actuation of a sensing device such a keypad, a touch screen, a microphone, and so on).

For convenience, the apparatuses 702, 704, and/or 706 are shown in FIG. 7 as including various components that may be configured according to the various examples described herein. Those skilled in the art will appreciate, however, that the illustrated blocks may have different functionality in different designs.

The components of FIG. 7 may be implemented in various ways. In some implementations, the components of FIG. 7 may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 708, 732, 738, and 744 may be implemented by processor and memory component(s) of the apparatus 702 (e.g., by execution of appropriate code and/or by appropriate configuration of processor components). Similarly, some or all of the functionality represented by blocks 714, 720, 734, 740, and 746 may be implemented by processor and memory component(s) of the apparatus 704 (e.g., by execution of appropriate code and/or by appropriate configuration of processor components). Also, some or all of the functionality represented by blocks 726, 736, 742, and 748 may be implemented by processor and memory component(s) of the apparatus 706 (e.g., by execution of appropriate code and/or by appropriate configuration of processor components).

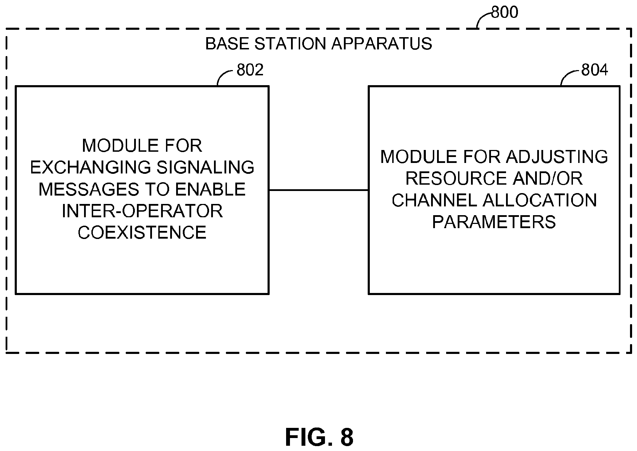

FIG. 8 illustrates an example base station apparatus 800 represented as a series of interrelated functional modules. A module 802 may be configured for exchanging one or more over-the-air (OTA) signaling messages between the base station apparatus 800, which may be associated with a first operator, and a second base station associated with a second operator, wherein the first operator and the second operator each provide cellular coverage in one or more unlicensed bands. In various embodiments, the module 802 for exchanging the OTA signaling messages may correspond at least in some aspects to, for example, a communication device or a component thereof as discussed herein (e.g., the macro cell base station 110A and/or small cell base stations 110B, 110C shown in FIG. 1, eNBs 410A, 410B shown in FIG. 4, the small cell base station 500 shown in FIG. 5, etc.). A module 804 for adjusting resource and/or channel allocation parameters may correspond at least in some aspects to, for example, a communication controller or a component thereof as discussed herein (e.g., the coexistence manager 112 in FIG. 1, the LTE SON 514 in FIG. 5, etc.), wherein the module 804 may be configured for adjusting one or more parameters that the base station apparatus 800 utilizes to provide cellular coverage in the one or more unlicensed bands according to the one or more OTA signaling messages, wherein the one or more parameters are adjusted at the base station apparatus 800 to reduce interference on resources that the first operator and the second operator share to provide the cellular coverage in the unlicensed bands. Furthermore, those skilled in the art will appreciate that the modules 802, 804 can be functional blocks that represent functions implemented by a processor, software, or combination thereof (e.g., firmware). For example, the module 802 may comprise means for exchanging the OTA signaling messages to enable inter-operator coexistence, wherein the means for exchanging the OTA signaling messages may include a receiver, transmitter, and/or other suitable means, and the module 804 may comprise means for adjusting resource and/or channel allocation parameters, wherein the means for adjusting the resource and/or channel allocation parameters can comprise a processor, one or more processor modules, a memory that retains instructions for executing functions associated with the module 804, and/or other suitable means.

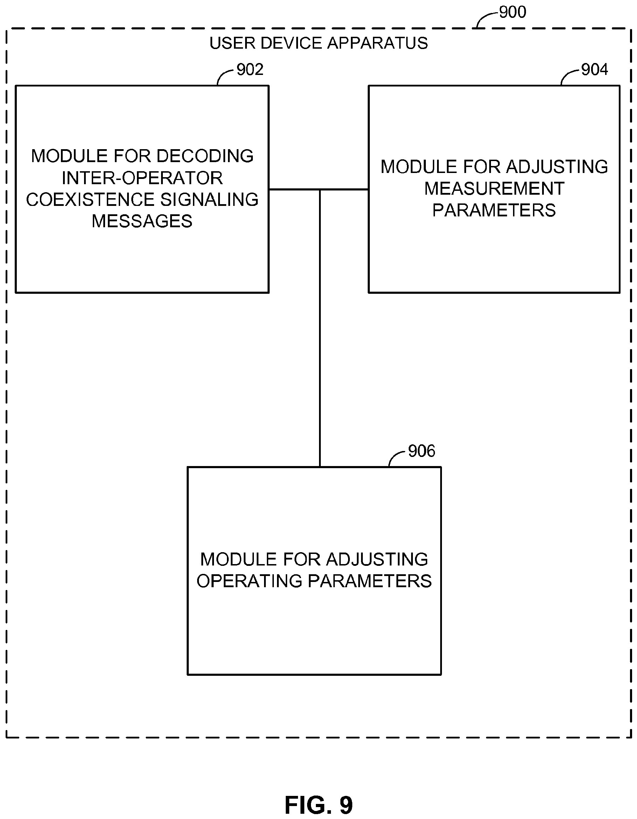

FIG. 9 illustrates an example user device apparatus 900 represented as a series of interrelated functional modules. A module 902 may be configured for decoding one or more over-the-air (OTA) signaling messages exchanged between a first operator and a second operator that provide cellular coverage in one or more unlicensed bands, a module 904 may be configured for adjusting one or more measurement parameters at the user device apparatus 900, and a module 906 may be configured for adjusting one or more operating parameters at the user device apparatus 900. In various embodiments, the modules 902, 904, 906 may correspond at least in some aspects to, for example, a communication device or a component thereof as discussed herein (e.g., the user devices 120 in FIG. 1, the STA 550 and/or UE 560 in FIG. 5, etc.). Furthermore, those skilled in the art will appreciate that the modules 902, 904, 906 can be functional blocks that represent functions implemented by a processor, software, or combination thereof (e.g., firmware). For example, the modules 902, 904, 906 may comprise means for decoding the one or more OTA signaling messages exchanged between the first operator and the second operator, means for adjusting the one or more measurement parameters at the user device apparatus 900, and means for adjusting the one or more operating parameters at the user device apparatus 900, wherein the means for performing the above functions may comprise a receiver, a transmitter, a processor, one or more processor modules, a memory that retains instructions for executing functions associated with the modules 902, 904, 906, and/or other suitable means.

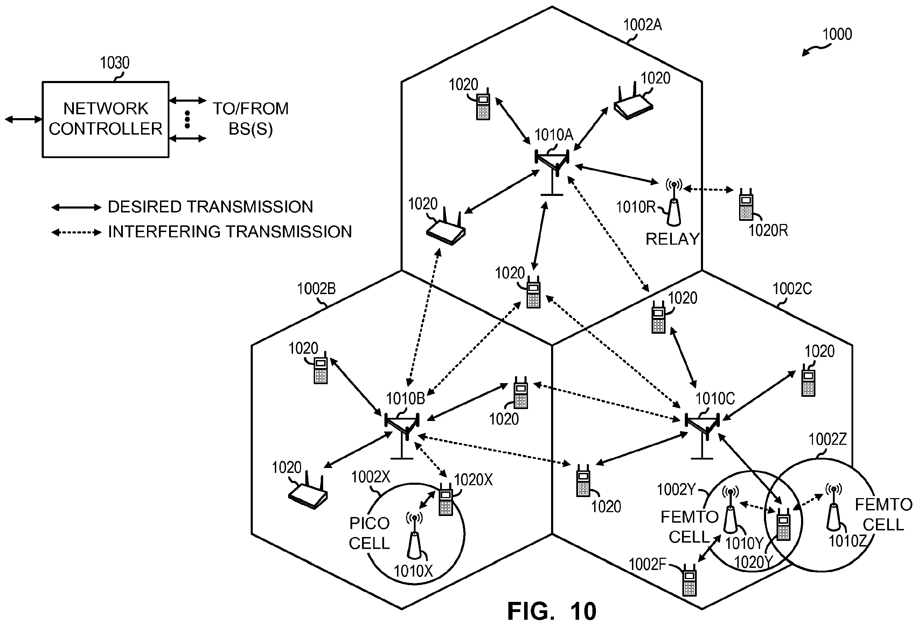

FIG. 10 illustrates an example communication system environment in which the inter-operator coexistence teachings and structures herein may be incorporated. The wireless communication system 1000, which will be described at least in part as an LTE network for illustration purposes, includes a number of eNBs 1010 and other network entities. Each of the eNBs 1010 provides communication coverage for a particular geographic area, such as macro cell or small cell coverage areas.

In the illustrated example, the eNBs 1010A, 1010B, and 1010C are macro cell eNBs for the macro cells 1002A, 1002B, and 1002C, respectively. The macro cells 1002A, 1002B, and 1002C may cover a relatively large geographic area (e.g., several kilometers in radius) and may allow unrestricted access by UEs with service subscription. The eNB 1010X is a particular small cell eNB referred to as a pico cell eNB for the pico cell 1002X. The pico cell 1002X may cover a relatively small geographic area and may allow unrestricted access by UEs with service subscription. The eNBs 1010Y and 1010Z are particular small cells referred to as femto cell eNBs for the femto cells 1002Y and 1002Z, respectively. The femto cells 1002Y and 1002Z may cover a relatively small geographic area (e.g., a home) and may allow unrestricted access by UEs (e.g., when operated in an open access mode) or restricted access by UEs having association with the femto cell (e.g., UEs in a Closed Subscriber Group (CSG), UEs for users in the home, etc.), as discussed in more detail below.

The wireless network 1000 also includes a relay station 1010R. A relay station is a station that receives a transmission of data and/or other information from an upstream station (e.g., an eNB or a UE) and sends a transmission of the data and/or other information to a downstream station (e.g., a UE or an eNB). A relay station may also be a UE that relays transmissions for other UEs (e.g., a mobile hotspot). In the example shown in FIG. 10, the relay station 1010R communicates with the eNB 1010A and a UE 1020R in order to facilitate communication between the eNB 1010A and the UE 1020R. A relay station may also be referred to as a relay eNB, a relay, etc.

The wireless network 1000 is a heterogeneous network in that the wireless network 1000 includes eNBs of different types, including macro eNBs, pico eNBs, femto eNBs, relays, etc. As discussed in more detail above, these different types of eNBs may have different transmit power levels, different coverage areas, and different impacts on interference in the wireless network 1000. For example, macro eNBs may have a relatively high transmit power level whereas pico eNBs, femto eNBs, and relays may have a lower transmit power level (e.g., by a relative margin, such as a 10 dBm difference or more).

Returning to FIG. 10, the wireless network 1000 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time. Unless otherwise noted, the techniques described herein may be used for both synchronous and asynchronous operation.

A network controller 1030 may couple to a set of eNBs and provide coordination and control for these eNBs. The network controller 1030 may communicate with the eNBs 1010 via a backhaul. The eNBs 1010 may also communicate with one another, e.g., directly or indirectly via a wireless or wireline backhaul.

As shown, the UEs 1020 may be dispersed throughout the wireless network 1000, and each UE may be stationary or mobile, corresponding to, for example, a cellular phone, a personal digital assistant (PDA), a wireless modem, a wireless communication device, a handheld device, a laptop computer, a cordless phone, a wireless local loop (WLL) station, or other mobile entities. In FIG. 10, a solid line with double arrows indicates desired transmissions between a UE and a serving eNB, which is an eNB designated to serve the UE on the downlink and/or uplink. A dashed line with double arrows indicates potentially interfering transmissions between a UE and an eNB. For example, UE 1020Y may be in proximity to femto eNBs 1010Y, 1010Z. Uplink transmissions from UE 1020Y may interfere with femto eNBs 1010Y, 1010Z. Uplink transmissions from UE 1020Y may jam femto eNBs 1010Y, 1010Z and degrade the quality of reception of other uplink signals to femto eNBs 1010Y, 1010Z.

Small cell eNBs such as the pico cell eNB 1010X and femto eNBs 1010Y, 1010Z may be configured to support different types of access modes. For example, in an open access mode, a small cell eNB may allow any UE to obtain any type of service via the small cell. In a restricted (or closed) access mode, a small cell may only allow authorized UEs to obtain service via the small cell. For example, a small cell eNB may only allow UEs (e.g., so called home UEs) belonging to a certain subscriber group (e.g., a CSG) to obtain service via the small cell. In a hybrid access mode, alien UEs (e.g., non-home UEs, non-CSG UEs) may be given limited access to the small cell. For example, a macro UE that does not belong to a small cell's CSG may be allowed to access the small cell only if sufficient resources are available for all home UEs currently being served by the small cell.

By way of example, femto eNB 1010Y may be an open-access femto eNB with no restricted associations to UEs. The femto eNB 1010Z may be a higher transmission power eNB initially deployed to provide coverage to an area. Femto eNB 1010Z may be deployed to cover a large service area. Meanwhile, femto eNB 1010Y may be a lower transmission power eNB deployed later than femto eNB 1010Z to provide coverage for a hotspot area (e.g., a sports arena or stadium) for loading traffic from either or both eNB 1010C, eNB 1010Z.

Those skilled in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those skilled in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted to depart from the scope of the present disclosure.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The methods, sequences and/or algorithms described in connection with the aspects disclosed herein may be embodied directly in hardware, in a software module executed by a processor, or in a combination of the two. A software module may reside in RAM, flash memory, ROM, EPROM, EEPROM, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a wireless device, or in the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, DSL, or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes CD, laser disc, optical disc, DVD, floppy disk and Blu-ray disc where disks usually reproduce data magnetically and/or optically with lasers. Combinations of the above should also be included within the scope of computer-readable media.

While the foregoing disclosure shows illustrative aspects of the disclosure, those skilled in the art will appreciate that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method (600) for inter-operator coexistence on unlicensed bands, comprising:
receiving (602), at a first base station associated with a first operator, one or more over-the-air, OTA, signaling messages from a second base station associated with a second operator, wherein the first base station and the second base station each provide cellular service in one or more unlicensed bands in overlapping coverage areas; and
adjusting (604), at the first base station, one or more parameters used to provide the cellular service in the one or more unlicensed bands according to the one or more OTA signaling messages received from the second base station to reduce interference on resources that the first operator and the second operator share to provide the cellular service in the one or more unlicensed bands;
wherein the one or more OTA signaling messages comprise one or more overhead control messages that are configured to carry coexistence information associated with the cellular service provided in the one or more unlicensed bands; and
wherein the coexistence information comprises one or more of Time-Division Multiplexing, TDM, patterns, radio access technologies, transmission power, cell loading information, or traffic quality of coverage, QoS.

2. The method (600) recited in claim 1, wherein the resources that the first operator and the second operator share to provide the cellular service in the unlicensed bands comprise one or more of time, frequency, or spatial resources.

3. The method (600) recited in claim 1, wherein the one or more overhead control messages comprise one or more System Information Block (SIB) messages dedicated to carrying the coexistence information associated with the cellular service provided in the unlicensed bands.

4. The method (600) recited in claim 1, wherein the one or more overhead control messages comprise one or more System Information Block Type 1, SIB1, messages that are sent over a secondary cell and have one or more fields configured to carry the coexistence information.

5. The method (600) recited in claim 1, wherein the one or more overhead control messages are sent over a secondary cell according to a Multicast Broadcast Single Frequency Network, MBSFN, subframe configuration arranged between the first operator and the second operator.

6. The method (600) recited in claim 1, wherein the coexistence information further comprises measurement information obtained on an unlicensed channel that a third operator utilizes to provide cellular service in the unlicensed bands.

7. The method (600) recited in claim 1, further comprising:
configuring, by a Long Term Evolution, LTE, Self-Organizing Network, SON, entity, the one or more adjusted parameters used at the first base station to provide the cellular service in the one or more unlicensed bands according to the one or more OTA signaling messages.

8. A base station apparatus associated with a first operator, the base station apparatus comprising:
means for receiving (602) one or more over-the-air, OTA, signaling messages from a second base station associated with a second operator, wherein the base station apparatus and the second base station each provide cellular service in one or more unlicensed bands in overlapping coverage areas; and
means (604) for adjusting one or more parameters used to provide the cellular service in the one or more unlicensed bands according to the one or more OTA signaling messages received from the second base station to reduce interference on resources that the first operator and the second operator share to provide the cellular service in the one or more unlicensed bands;
wherein the one or more OTA signaling messages comprise one or more overhead control messages that are configured to carry coexistence information associated with the cellular service provided in the one or more unlicensed bands; and
wherein the coexistence information comprises one or more of Time-Division Multiplexing, TDM, patterns, radio access technologies, transmission power, cell loading information, or traffic quality of coverage, QoS.

9. A computer-readable storage medium having computer-executable instructions recorded thereon, wherein executing the computer-executable instructions on one or more processors causes the one or more processors to:
receive (602), at a first base station associated with a first operator, one or more over-the-air, OTA, signaling messages from a second base station associated with a second operator, wherein the first base station and the second base station each provide cellular service in one or more unlicensed bands in overlapping coverage areas; and
adjust (604), at the first base station, one or more parameters used to provide the cellular service in the one or more unlicensed bands according to the one or more OTA signaling messages received from the second base station to reduce interference on resources that the first operator and the second operator share to provide the cellular service in the one or more unlicensed bands;
wherein the one or more OTA signaling messages comprise one or more overhead control messages that are configured to carry coexistence information associated with the cellular service provided in the one or more unlicensed bands; and
wherein the coexistence information comprises one or more of Time-Division Multiplexing, TDM, patterns, radio access technologies, transmission power, cell loading information, or traffic quality of coverage, QoS.

## Patentansprüche

1. Ein Verfahren (600) für eine Zwischen-Betreiber-Koexistenz auf nicht-lizensierten Bändern, aufweisend:
Empfangen (602), an einer ersten Basisstation, die mit einem ersten Betreiber assoziiert ist, einer oder mehrerer OTA (Over-the-Air)-Signalisierungsnachrichten von einer zweiten Basisstation, die mit einem zweiten Betreiber assoziiert ist, wobei die erste Basisstation und die zweite Basisstation jeweils einen Mobilfunkdienst in einem oder mehreren nicht-lizensierten Bändern in überlappenden Abdeckungsbereichen vorsehen, und
Einstellen (604), an der ersten Basisstation, eines oder mehrerer Parameter, die für das Vorsehen des Mobilfunkdiensts in dem einen oder den mehreren nicht-lizensierten Bändern verwendet werden, gemäß der einen oder den mehreren von der zweiten Basisstation empfangenen OTA-Signalisierungsnachrichten, um eine Interferenz auf Ressourcen, die sich der erste Betreiber und der zweite Betreiber für das Vorsehen des Mobilfunkdiensts in dem einen oder den mehreren nicht-lizensierten Bändern teilen, zu reduzieren,
wobei die eine oder die mehreren OTA-Signalisierungsnachrichten eine oder mehrere Overhead-Steuernachrichten aufweisen, die konfiguriert sind zum Tragen von Koexistenzinformationen, die mit dem in dem einen oder den mehreren nicht-lizensierten Bändern vorgesehenen Mobilfunkdienst assoziiert sind, und
wobei die Koexistenzinformationen Zeitmultiplex (TDM)-Muster, Funkzugriffstechnologien, die Sendeleistung, Zellenlastinformationen, oder die Abdeckungsqualität (QoS) des Verkehrs aufweisen.

2. Verfahren (600) nach Anspruch 1, wobei die Ressourcen, die sich der erste Betreiber und der zweite Betreiber teilen, um den Mobilfunkdienst in den nicht-lizensierten Bändern vorzusehen, Zeit-, Frequenz- oder Raumressourcen sind.

3. Verfahren (600) nach Anspruch 1, wobei die eine oder die mehreren Overhead-Steuernachrichten eine oder mehrere Systeminformationsblock (SIB)-Nachrichten aufweisen, die dediziert sind zum Tragen der Koexistenzinformationen, die mit dem in den nicht-linzensierten Bändern vorgesehenen Mobilfunkdienst assoziiert sind.

4. Verfahren (600) nach Anspruch 1, wobei die eine oder die mehreren Overhead-Steuernachrichten eine oder mehrere Systeminformationsblock Typ 1 (SIB1)-Nachrichten aufweisen, die über eine sekundäre Zelle gesendet zu werden und ein oder mehrere Felder aufweisen, die konfiguriert sind zum Tragen der Koexistenzinformationen.

5. Verfahren (600) nach Anspruch 1, wobei die eine oder die mehreren Overhead-Steuernachrichten über eine sekundäre Zelle gemäß einer zwischen dem ersten Betreiber und dem zweiten Betreiber vereinbarten MBSFN (Multicast Broadcast Single Frequency Network)-Subrahmenkonfiguration gesendet werden.

6. Verfahren (600) nach Anspruch 1, wobei die Koexistenzinformationen weiterhin Messinformationen aufweisen, die auf einem nicht-lizensierten Kanal erhalten werden, den ein dritter Betreiber für das Vorsehen eines Mobilfunkdiensts in den nicht-lizensierten Bändern verwendet.

7. Verfahren (600) nach Anspruch 1, das weiterhin aufweist:
Konfigurieren, durch eine LTE (Long Term Evolution) SON (Self-Organizing Network)-Einheit, des einen oder der mehreren eingestellten Parameter, die an der ersten Basisstation für das Vorsehen des Mobilfunkdiensts in dem einen oder den mehreren nicht-lizensierten Bändern verwendet werden, gemäß der einen oder der mehreren OTA-Signalisierungsnachrichten.

8. Eine Basisstationsvorrichtung, die mit einem ersten Betreiber assoziiert ist, wobei die Basisstationsvorrichtung aufweist:
Mittel zum Empfangen (602) einer oder mehrerer OTA (Over-the-Air)-Signalisierungsnachrichten von einer zweiten Basisstation, die mit einem zweiten Betreiber assoziiert ist, wobei die Basisstationsvorrichtung und die zweite Basisstation jeweils einen Mobilfunkdienst in einem oder mehreren nicht-lizensierten Bändern in überlappenden Abdeckungsbereichen vorsehen, und
Mittel zum Einstellen (604) eines oder mehrerer Parameter, die für das Vorsehen des Mobilfunkdiensts in dem einen oder den mehreren nicht-lizensierten Bändern verwendet werden, gemäß der einen oder den mehreren von der zweiten Basisstation empfangenen OTA-Signalisierungsnachrichten, um eine Interferenz auf Ressourcen, die sich der erste Betreiber und der zweite Betreiber für das Vorsehen des Mobilfunkdiensts in dem einen oder den mehreren nicht-lizensierten Bändern teilen, zu reduzieren,
wobei die eine oder die mehreren OTA-Signalisierungsnachrichten eine oder mehrere Overhead-Steuernachrichten aufweisen, die konfiguriert sind zum Tragen von Koexistenzinformationen, die mit dem in dem einen oder den mehreren nicht-lizensierten Bändern vorgesehenen Mobilfunkdienst assoziiert sind, und
wobei die Koexistenzinformationen Zeitmultiplex (TDM)-Muster, Funkzugriffstechnologien, die Sendeleistung, Zellenlastinformationen, oder die Abdeckungsqualität (QoS) des Verkehrs aufweisen.

9. Ein computerlesbares Speichermedium mit darauf aufgezeichneten computerausführbaren Befehlen, wobei die computerausführbaren Befehle bei einer Ausführung auf einem oder mehreren Prozessoren die Prozessoren veranlassen zum:
Empfangen (602), an einer ersten Basisstation, die mit einem ersten Betreiber assoziiert ist, einer oder mehrerer OTA (Over-the-Air)-Signalisierungsnachrichten von einer zweiten Basisstation, die mit einem zweiten Betreiber assoziiert ist, wobei die erste Basisstation und die zweite Basisstation jeweils einen Mobilfunkdienst in einem oder mehreren nicht-lizensierten Bändern in überlappenden Abdeckungsbereichen vorsehen, und
Einstellen (604), an der ersten Basisstation, eines oder mehrerer Parameter, die für das Vorsehen des Mobilfunkdiensts in dem einen oder den mehreren nicht-lizensierten Bändern verwendet werden, gemäß der einen oder den mehreren von der zweiten Basisstation empfangenen OTA-Signalisierungsnachrichten, um eine Interferenz auf Ressourcen, die sich der erste Betreiber und der zweite Betreiber für das Vorsehen des Mobilfunkdiensts in dem einen oder den mehreren nicht-lizensierten Bändern teilen, zu reduzieren,
wobei die eine oder die mehreren OTA-Signalisierungsnachrichten eine oder mehrere Overhead-Steuernachrichten aufweisen, die konfiguriert sind zum Tragen von Koexistenzinformationen, die mit dem in dem einen oder den mehreren nicht-lizensierten Bändern vorgesehenen Mobilfunkdienst assoziiert sind, und
wobei die Koexistenzinformationen Zeitmultiplex (TDM)-Muster, Funkzugriffstechnologien, die Sendeleistung, Zellenlastinformationen, oder die Abdeckungsqualität (QoS) des Verkehrs aufweisen.

## Revendications

1. Procédé (600) pour une coexistence entre opérateurs sur des bandes sans licence, comprenant :
une réception (602), au niveau d'une première station de base associée à un premier opérateur, d'un ou de plusieurs messages de signalisation en direct, OTA, à partir d'une seconde station de base associée à un deuxième opérateur, dans lequel la première station de base et la seconde station de base fournissent chacune un service cellulaire dans une ou plusieurs bandes sans licence dans des zones de couverture se chevauchant ; et
un ajustement (604), au niveau de la première station de base, d'un ou de plusieurs paramètres utilisés pour fournir le service cellulaire dans les une ou plusieurs bandes sans licence selon les un ou plusieurs messages de signalisation OTA reçus à partir de la seconde station de base pour réduire une interférence sur des ressources que le premier opérateur et le deuxième opérateur partagent pour fournir le service cellulaire dans les une ou plusieurs bandes sans licence ;
dans lequel les un ou plusieurs messages de signalisation OTA comprennent un ou plusieurs messages de commande de surdébit qui sont configurés pour porter des informations de coexistence associées au service cellulaire fourni dans les une ou plusieurs bandes sans licence ; et
dans lequel les informations de coexistence comprennent un ou plusieurs de motifs de multiplexage par répartition dans le temps, TDM, de technologies d'accès radio, d'une puissance de transmission, d'informations de chargement de cellule, ou d'une couverture de qualité, QoS, de trafic.

2. Procédé (600) selon la revendication 1, dans lequel les ressources que le premier opérateur et le deuxième opérateur partagent pour fournir le service cellulaire dans les bandes sans licence comprennent une ou plusieurs ressources de temps, de fréquence, ou spatiales.

3. Procédé (600) selon la revendication 1, dans lequel les un ou plusieurs messages de commande de surdébit comprennent un ou plusieurs messages de bloc d'information système (SIB) dédiés à porter les informations de coexistence associées au service cellulaire fourni dans les bandes sans licence.

4. Procédé (600) selon la revendication 1, dans lequel les un ou plusieurs messages de commande de surdébit comprennent un ou plusieurs messages de bloc d'information système de type 1, SIB1, qui sont envoyés sur une cellule secondaire et présentent un ou plusieurs champs configurés pour porter les informations de coexistence.

5. Procédé (600) selon la revendication 1, dans lequel les un ou plusieurs messages de commande de surdébit sont envoyés sur une cellule secondaire selon une configuration de sous-trame de réseau monofréquence de diffusion/multidiffusion, MBSFN, agencée entre le premier opérateur et le deuxième opérateur.

6. Procédé (600) selon la revendication 1, dans lequel les informations de coexistence comprennent en outre des informations de mesure obtenues sur un canal sans licence qu'un troisième opérateur utilise pour fournir un service cellulaire dans les bandes sans licence.

7. Procédé (600) selon la revendication 1, comprenant en outre :
une configuration, par une entité de réseau autoorganisé, SON, d'évolution à long terme, LTE, des un ou plusieurs paramètres ajustés utilisés au niveau de la première station de base pour fournir le service cellulaire dans les une ou plusieurs bandes sans licence selon les un ou plusieurs messages de signalisation OTA.

8. Appareil de station de base associé à un premier opérateur, l'appareil de station de base comprenant :
un moyen de réception (602) d'un ou de plusieurs messages de signalisation en direct, OTA, à partir d'une seconde station de base associée à un deuxième opérateur, dans lequel l'appareil de station de base et la seconde station de base fournissent chacun un service cellulaire dans une ou plusieurs bandes sans licence dans des zones de couverture se chevauchant ; et
un moyen (604) d'ajustement d'un ou de plusieurs paramètres utilisés pour fournir le service cellulaire dans les une ou plusieurs bandes sans licence selon les un ou plusieurs messages de signalisation OTA reçus à partir de la seconde station de base pour réduire une interférence sur des ressources que le premier opérateur et le deuxième opérateur partagent pour fournir le service cellulaire dans les une ou plusieurs bandes sans licence ;
dans lequel les un ou plusieurs messages de signalisation OTA comprennent un ou plusieurs messages de commande de surdébit qui sont configurés pour porter des informations de coexistence associées au service cellulaire fourni dans les une ou plusieurs bandes sans licence ; et
dans lequel les informations de coexistence comprennent un ou plusieurs de motifs de multiplexage par répartition dans le temps, TDM, de technologies d'accès radio, d'une puissance de transmission, d'informations de chargement de cellule, ou d'une couverture de qualité, QoS, de trafic.

9. Support de stockage lisible par ordinateur présentant des instructions exécutables par ordinateur enregistrées dessus, dans lequel l'exécution des instructions exécutables par ordinateur sur un ou plusieurs processeurs amène les un ou plusieurs processeurs :
à recevoir (602), au niveau d'une première station de base associée à un premier opérateur, un ou plusieurs messages de signalisation en direct, OTA, à partir d'une seconde station de base associée à un deuxième opérateur, dans lequel la première station de base et la seconde station de base fournissent chacune un service cellulaire dans une ou plusieurs bandes sans licence dans des zones de couverture se chevauchant ; et
à ajuster (604), au niveau de la première station de base, un ou plusieurs paramètres utilisés pour fournir le service cellulaire dans les une ou plusieurs bandes sans licence selon les un ou plusieurs messages de signalisation OTA reçus à partir de la seconde station de base pour réduire une interférence sur des ressources que le premier opérateur et le deuxième opérateur partagent pour fournir le service cellulaire dans les une ou plusieurs bandes sans licence ;
dans lequel les un ou plusieurs messages de signalisation OTA comprennent un ou plusieurs messages de commande de surdébit qui sont configurés pour porter des informations de coexistence associées au service cellulaire fourni dans les une ou plusieurs bandes sans licence ; et
dans lequel les informations de coexistence comprennent un ou plusieurs de motifs de multiplexage par répartition dans le temps, TDM, de technologies d'accès radio, d'une puissance de transmission, d'informations de chargement de cellule, ou d'une couverture de qualité, QoS, de trafic.
